(19) Europäisches Patentamt / European Patent Office / Office européen des brevets

(11) **EP 1 500 566 B1**

(12) **FASCICULE DE BREVET EUROPEEN**

(45) Date de publication et mention
de la délivrance du brevet:
**27.10.2010 Bulletin 2010/43**

(51) Int Cl.:
***B60T 8/17*** *(2006.01)*

(21) Numéro de dépôt: **04291727.8**

(22) Date de dépôt: **08.07.2004**

(54) **Frein électromécanique et son procédé de commande**

Elektromechanische Bremsanlage und Verfahren zu deren Steuerung

Electromechanical brake and method for controlling the same

(84) Etats contractants désignés:
**AT BE BG CH CY CZ DE DK EE ES FI FR GB GR
HU IE IT LI LU MC NL PL PT RO SE SI SK TR**

(30) Priorité: **25.07.2003 FR 0309135**

(43) Date de publication de la demande:
**26.01.2005 Bulletin 2005/04**

(73) Titulaires:
• **MESSIER-BUGATTI
78140 Vélizy Villacoublay (FR)**
• **ARTUS
49240 Avrille (FR)**

(72) Inventeurs:
• **Girod, Pierre
75017 PARIS (FR)**
• **Quesne, Patrick
49000 ECOUFLANT (FR)**

(74) Mandataire: **Jaunez, Xavier et al
Cabinet Boettcher,
22, rue du Général Foy
75008 Paris (FR)**

(56) Documents cités:
**EP-A- 0 984 190     DE-A- 19 858 764
FR-A- 2 557 241     US-A- 5 090 518
US-B1- 6 179 097**

EP 1 500 566 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

L'invention concerne un actionneur pour frein électromécanique, un frein comportant un tel actionneur, et un véhicule comportant au moins un tel frein, ainsi qu'un procédé de mise en oeuvre dudit actionneur.

ARRIERE-PLAN DE L'INVENTION

On connaît des freins électromécaniques comportant une pile de disques et au moins un actionneur qui comporte un poussoir et un moteur électrique agencé pour déplacer le poussoir en regard de la pile de disques pour appliquer ledit poussoir contre celle-ci.

Le moteur électrique est commandé pour presser le poussoir contre la pile de disques avec une pression égale à une pression nominale qui est en fonction de l'intensité du freinage désirée, cette pression nominale pouvant être modulée en réponse à la détection d'un glissement de la roue ainsi freinée, ce afin d'éviter le blocage de ladite roue.

Le moteur électrique doit donc être dimensionné pour assurer les fonctions suivantes :

- approche rapide sous couple négligeable du poussoir vers la pile de disques ;
- application d'une pression nominale sur la pile de disques, à vitesse contrôlée généralement lente mais sous couple élevé ;
- modulation de la pression nominale, requérant des déplacements courts mais très rapides, sous couple élevé.

Cette dernière condition est très astreignante et oblige à retenir des moteurs de puissance, et donc de masse, importante, ayant pour inconvénient de présenter une grande inertie.

On a proposé, par exemple dans le document DE 198 58 764 A, de disposer un ensemble piézoélectrique dans le poussoir de l'actionneur, l'ensemble piézoélectrique permettant d'assurer une modulation de la pression nominale, tandis que le moteur électrique n'est utilisé que pour l'application de la pression nominale, ce qui permet l'utilisation de moteurs électriques moins puissants, donc moins lourds et moins consommateurs d'énergie.

Néanmoins, dans la configuration proposée dans ce document, l'ensemble piézoélectrique est mobile avec le poussoir, ce qui complique la connexion électrique de l'ensemble piézoélectrique.

L'état de la technique de l'invention est également illustré par les documents US 5 090 518 A, US 6 179 097 A ou encore EP 0 984 190 A.

OBJET DE L'INVENTION

L'invention a pour objet de proposer un actionneur pour frein électromécanique comportant un ensemble piézoélectrique, dans lequel la connexion électrique de l'élément piézoélectrique est particulièrement simple.

BREVE DESCRIPTION DE L'INVENTION

L'invention a plus précisément pour objet un actionneur pour frein électromécanique comportant un poussoir et un premier organe moteur agencé pour déplacer le poussoir en regard d'une pile de disques et pour appliquer une pression de freinage sur la pile de disques, l'actionneur comportant un deuxième organe moteur comprenant un ensemble piézoélectrique apte à assurer une modulation de la pression de freinage appliquée sur la pile de disques, dans lequel, selon l'invention, l'ensemble piézoélectrique est disposé dans l'actionneur pour présenter une extrémité fixe.

Ainsi, l'ensemble piézoélectrique ne se déplace pas avec le poussoir, ce qui facilite considérablement sa connexion électrique, qu'il s'agisse de son alimentation ou d'une lecture de tension à ses bornes. Il n'est en effet plus nécessaire de prévoir des connexions avec des fils libres, ou encore des contacts glissants ou pivotants, qui sont facteurs de réduction de la fiabilité de l'actionneur.

Selon un mode préféré de réalisation de l'invention, l'actionneur comporte :

- un boîtier dans lequel le poussoir coulisse selon un axe de coulissement,
- un manchon disposé dans le boîtier autour du poussoir pour tourner autour dudit axe de coulissement et relié audit poussoir par une liaison hélicoïdale ;
- un moteur électrique formant le premier organe moteur qui est disposé dans le boîtier autour du manchon et qui est agencé pour entraîner ledit manchon en rotation ;
- l'ensemble piézoélectrique qui est de forme tubulaire et qui est disposé dans le boîtier autour du moteur électrique, ledit ensemble piézoélectrique ayant, outre l'extrémité fixe, une autre extrémité formant butée axiale pour le manchon, l'élément piézoélectrique étant agencé pour provoquer un déplacement du manchon dans une direction parallèle à l'axe de coulissement.

Selon un aspect particulier de l'invention, le moteur électrique est relié au poussoir par une chaîne cinématique irréversible.

Avantageusement, l'actionneur est associé à des moyens de mesure d'une tension électrique à des bornes de l'ensemble piézoélectrique.

L'invention concerne également un frein comportant au moins un tel actionneur, et un véhicule comportant au moins un tel frein.

L'invention est également relative à un procédé de mise en oeuvre d'un actionneur électromécanique selon l'invention, dans lequel on relève la tension à des bornes de l'ensemble piézoélectrique, au moins lorsque celui-ci n'est pas actif.

BREVE DESCRIPTION DES DESSINS

L'invention sera mieux comprise à la lumière de la description qui suit en référence aux figures des dessins annexés parmi lesquelles :

- la figure 1 est une vue en coupe d'un frein électromécanique d'aéronef selon l'invention ;
- la figure 2 est une vue en coupe d'un actionneur électromécanique équipant le frein illustré à la figure 1 ;
- la figure 3 est un diagramme couple/vitesse illustrant le choix du moteur électrique équipant l'actionneur illustré à la figure 2 ;
- la figure 4 illustre un schéma-bloc d'une commande de l'actionneur de la figure 2.

DESCRIPTION DETAILLEE DE L'INVENTION

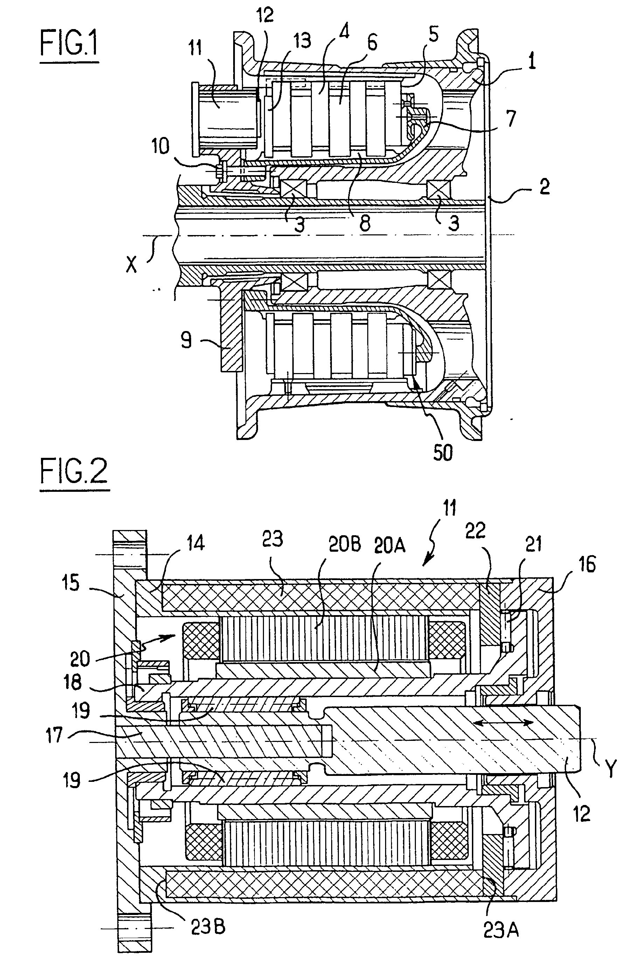

En référence à la figure 1, une roue d'aéronef 1 est montée en rotation sur un essieu 2 par l'intermédiaire de roulements 3 autour d'un axe de rotation X. La roue 1 est équipée d'un frein comprenant une pile de disques ayant un axe central confondu avec l'axe X et composée de disques rotors 4 qui sont mobiles en rotation avec la roue 1 grâce à un clavetage périphérique 5, et de disques stators 6 qui sont disposés en alternance avec les rotors 4 et qui sont liés en rotation à un tube de torsion 7 grâce à un clavetage intérieur 8. Le tube de torsion 7 est lui-même lié à une couronne 9 par des vis 10. La couronne 9 est arrêtée en rotation vis à vis de l'essieu 2 par un moyen d'arrêt non représenté ici, de sorte que les disques stators 6 sont immobiles en rotation.

La couronne 9 porte des actionneurs électromécaniques 11 dont un seul est représenté sur la figure 1. Les actionneurs 11 comportent chacun un poussoir 12 mobile en translation, qui est actionné par un organe moteur non visible ici pour presser la pile de disques par l'intermédiaire d'une plaque de pression 13.

Les actionneurs électromécaniques 11 sont agencés circonférentiellement sur la couronne 9, en étant répartis autour de l'axe central X.

En référence à la figure 2, chaque actionneur 11 comporte un boîtier qui comprend ici un corps cylindrique 14, un fond 15 formant platine d'accrochage sur la couronne 9, et un couvercle 16.

Le poussoir 12 est monté pour coulisser dans le boîtier selon un axe de coulissement Y, qui est essentiellement parallèle à l'axe X lorsque l'actionneur 11 est monté sur la couronne 9. Une tige 17 solidaire du fond 15 ayant un profil non circulaire (par exemple hexagonal) est engagée dans une cavité de forme homologue du poussoir 12 pour empêcher le poussoir 12 de tourner par rapport au boîtier de l'actionneur.

Autour du poussoir 12 s'étend un manchon 18 monté dans le boîtier pour tourner autour de l'axe Y. Le manchon 18 est relié au poussoir 12 par une liaison hélicoïdale assurée par des rouleaux satellites filetés 19 qui sont astreints à se déplacer longitudinalement avec le poussoir 12 et qui coopèrent avec un filetage interne du manchon (non représenté).

Autour du manchon 18 s'étend un moteur électrique 20, comprenant un rotor 20A solidaire en rotation du manchon 18, et un stator 20B monté fixe dans le boîtier.

Lorsque le moteur électrique 20 est alimenté, une rotation est imposée au rotor 20A qui entraîne avec lui le manchon 18. Une rotation du manchon 18 provoque donc le déplacement axial du poussoir 12, dans le sens correspondant, selon l'axe Y.

Le manchon 18 est arrêté axialement par une butée à rouleaux 21 qui prend appui sur une rondelle 22.

La rondelle 22 est elle-même en appui contre l'une des extrémités 23A d'un ensemble piézoélectrique 23, ici unitaire et ayant une forme cylindrique creuse, et s'étendant autour du moteur 20, en étant logé dans le corps cylindrique 14 du boîtier.

Selon une disposition essentielle de l'invention, l'ensemble piézoélectrique 23 est disposé dans l'actionneur pour présenter une extrémité fixe, ici l'extrémité 23B, qui est en appui contre une partie fixe du boîtier, en l'occurrence une face interne du corps cylindrique 14.

Cette disposition permet d'organiser très simplement l'alimentation électrique de l'ensemble piézoélectrique 23, puisque, contrairement à l'art antérieur, celui-ci ne se déplace pas dans l'actionneur.

Lorsqu'une tension électrique est imposée dans l'ensemble piézoélectrique 23, entre deux bornes de cet ensemble piézoélectrique, en particulier entre la périphérie externe et la périphérie interne dudit ensemble, celui-ci se dilate ou se contracte (effet piézoélectrique inverse) selon une direction parallèle à l'axe Y.

L'actionneur fonctionne de la façon suivante.

On alimente le moteur électrique 20 de façon à provoquer d'une part un déplacement d'approche du poussoir 12 entre une position d'attente éloignée de la pile de disques et une position de contact contre la pile de disques, et d'autre part un déplacement de mise en pression de la pile de disques pour appliquer une pression de freinage égale à une pression nominale, déterminée en fonction de l'intensité de freinage désirée.

Lorsque la pression nominale est appliquée, le poussoir 12 est en compression, tandis que le manchon 18 est en extension sous le même effort que celui que subit le poussoir 12. La butée à rouleaux 21 transmet cet effort à la rondelle 22, puis à l'ensemble piézoélectrique 23, qui se trouve donc en compression sous le même effort que celui que subit le poussoir 12.

Le relevé de la tension différentielle entre les bornes de l'ensemble piézoélectrique 23 donne alors directement une mesure représentative de l'effort que subit le poussoir 12, et donc de la pression qu'il impose à la pile de disques (effet piézoélectrique direct).

Cette caractéristique peut être exploitée pour utiliser l'ensemble piézoélectrique 23 en tant que capteur d'effort lors de phases où il n'est pas activement utilisé pour assurer une modulation de freinage, par exemple lors de l'application d'un effort de freinage de parc. A cet effet, l'actionneur est associé à des moyens de mesure de tension aux bornes de l'ensemble piézoélectrique 23, ces moyens pouvant par exemple être contenus dans un boîtier de commande de l'actionneur.

Il est habituel, pour des freins d'aéronefs, de moduler la pression de freinage afin d'éviter un blocage de la roue 1, qui se caractérise par une chute de la vitesse de rotation de ladite roue. A cet effet, dans les actionneurs connus non équipés d'un ensemble piézoélectrique, on commande le moteur électrique pour moduler la pression de freinage.

En l'espèce, on utilise l'ensemble piézoélectrique 23 pour assurer la modulation du freinage, le moteur 20 n'étant employé que pour assurer le déplacement d'approche et le déplacement de mise en pression pour le poussoir 12.

Pour ce faire, on impose entre les bornes de l'ensemble piézoélectrique 23 une tension électrique qui provoque une variation de la longueur axiale de l'ensemble piézoélectrique 23. C'est ainsi que cette variation peut provoquer un léger déplacement axial du manchon 18 (de l'ordre de quelques centièmes de millimètre) et donc du poussoir 12, dans un sens tendant à moduler, c'est-à-dire relâcher ou renforcer, l'effort exercé par le poussoir 12 sur la pile de disques. On peut ainsi réaliser un relâchement de l'effet piézoélectrique par rapport à un effort statique maximal, ou inversement l'effet piézoélectrique peut augmenter l'effort appliqué sur la pile de disques à partir d'un effort statique minimal. Pendant ce temps, le moteur 20 est maintenu en position angulaire. Le déplacement du poussoir ainsi obtenu est de l'ordre de quelques centièmes de millimètre, ce qui est en fait largement suffisant, étant donné la raideur du frein et de la pile de disques, pour provoquer une variation significative de l'effort de freinage.

L'utilisation d'un second organe moteur pour effectuer la modulation de freinage présente plusieurs avantages.

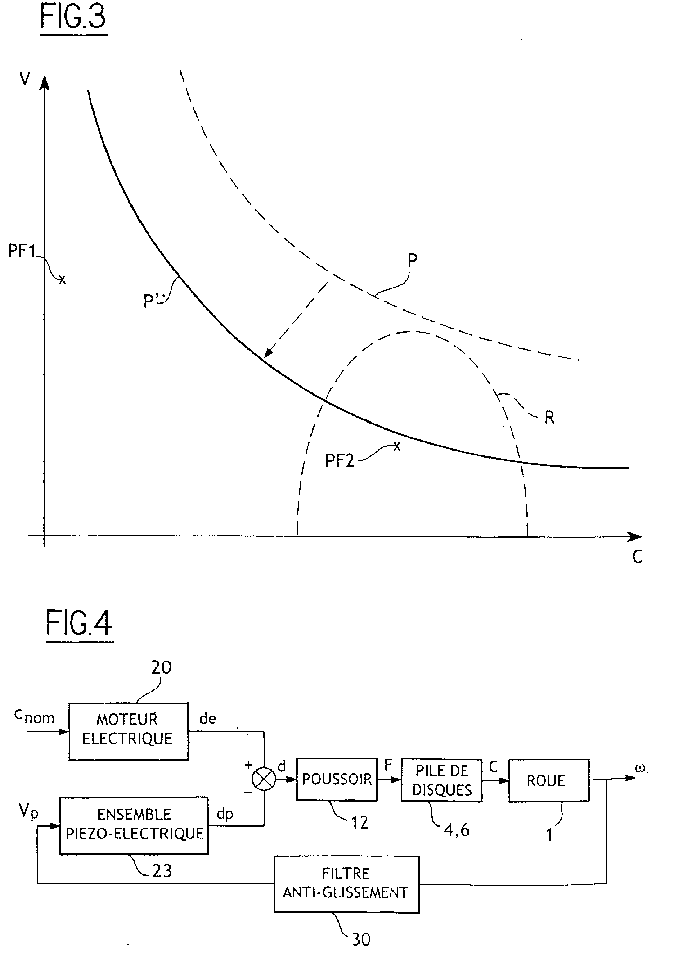

Concernant tout d'abord le moteur électrique 20, on constate que le déplacement d'approche est effectué à couple négligeable et à grande vitesse. Il correspond au point de fonctionnement PF1 illustré sur le diagramme de la figure 3. Pour ce qui est du déplacement de mise en pression, il est effectué sous un couple important, mais à faible vitesse. Il correspond au point de fonctionnement PF2 du même diagramme.

Si on avait voulu assurer la modulation de freinage à l'aide du moteur électrique 20, il aurait alors fallu tenir compte de points de fonctionnement répartis dans la région R illustrée en pointillés sur le diagramme, et qui correspondent à des déplacements rapides sous fort couple caractéristiques de la modulation de la pression de freinage. Cette option obligerait alors à choisir un moteur électrique dont la puissance P (dont la caractéristique est illustrée en pointillés) doit être compatible avec tous les points de fonctionnement retenus.

Avec le choix de confier la modulation de la pression de freinage à l'ensemble piézoélectrique 23, le moteur électrique 20 n'a donc plus à couvrir les points de fonctionnement situés dans la région R du diagramme correspondant à la modulation de la pression de freinage, mais uniquement les points de fonctionnement PF1 et PF2. On peut alors retenir un moteur dont la puissance P' (dont la caractéristique est illustrée en traits pleins sur le diagramme de la figure 3) est bien plus faible que la puissance P.

Le moteur électrique 20 ainsi sélectionné est donc bien moins lourd, et présente une consommation électrique notablement diminuée.

Concernant maintenant l'ensemble piézoélectrique 23, celui-ci est particulièrement bien adapté pour effectuer la modulation de la pression de freinage. En effet, l'ensemble piézoélectrique 23 présente une réponse très rapide en comparaison de celle du moteur électrique handicapé par une inertie importante, ce qui permet des vitesses de déplacement très importantes, particulièrement intéressantes pour effectuer une modulation de la pression de freinage. La course limitée de l'ensemble piézoélectrique 23 est néanmoins compatible avec la course nécessaire à la modulation de la pression de freinage, étant donné la grande raideur du frein dans la direction axiale.

Ainsi, grâce à l'utilisation de deux organes moteurs, en l'occurrence le moteur électrique 20 et l'ensemble piézoélectrique 23, dédiés chacun à une tâche particulière, le fonctionnement de l'actionneur est optimisé, tout en procurant un gain de poids appréciable.

Un autre avantage des dispositions de l'invention réside dans le fait que les exigences de rendement et de précision de la chaîne cinématique allant du moteur électrique 20 au poussoir 12 peuvent être notablement diminuées. En effet, dans un actionneur électromécanique classique sans ensemble piézoélectrique, il est important de disposer d'un excellent rendement pour éviter des pertes d'énergie par frottement qui sont facteurs de consommation électrique et d'échauffement, ainsi que d'une précision élevée pour contrôler finement la pression de freinage appliquée. Dans l'actionneur de l'invention, la précision quant à la pression appliquée au moyen du moteur électrique 20 peut être relâchée, dans la mesure où l'ensemble piézoélectrique 23 régule cette pression de freinage. Le relâchement des exigences de rendement et de précision permet donc d'importantes économies pour la fabrication de l'actionneur.

La chaîne cinématique entre le moteur électrique 20 et le poussoir 12 peut par ailleurs être prévue irréversible, ce qui est difficilement envisageable dans un actionneur électromécanique classique. En effet, le principal inconvénient lié à l'irréversibilité est le risque de coincement. Pour éviter ce risque, les actionneurs classiques sont donc conçus avec une chaîne cinématique réversible, ce qui impose de garder le moteur électrique constamment alimenté pendant les phases de freinage afin de maintenir l'effort de freinage, et également de prévoir un organe de blocage pour assurer le maintien d'une pression de blocage du frein lorsque l'aéronef est à l'arrêt et que le moteur électrique n'est pas alimenté.

Grâce à l'ensemble piézoélectrique 23, ce risque de blocage est notablement diminué. En effet, avant de manoeuvrer le moteur électrique 20 en sens inverse pour provoquer l'éloignement du poussoir 12 par rapport à la pile de disques, on impose aux bornes de l'ensemble piézoélectrique 23 une tension électrique qui provoque la contraction désirée dudit ensemble. Cette contraction provoque un relâchement substantiel de la pression de freinage, ce qui rend possible l'entraînement du poussoir 12 par le moteur électrique 20. On peut ainsi prévoir une chaîne cinématique irréversible entre le moteur électrique 20 et le poussoir 12, ce qui permet non seulement de couper l'alimentation du moteur électrique une fois la mise en pression effectuée, générant ainsi d'importantes économies énergétiques, mais également de se passer d'un organe de blocage.

La figure 4 illustre une façon de commander le moteur électrique 20 et l'ensemble piézoélectrique 23.

Une consigne de position angulaire Cnom destinée au moteur électrique 20 est générée par un calculateur de freinage (non représenté). Cette consigne correspond à la pression de freinage nominale choisie en fonction de l'intensité de freinage désirée. Cette consigne est soit constante, soit lentement variable.

Le moteur électrique 20 déplace alors le poussoir 12 en réponse à la consigne Cnom, ce qui a pour conséquence de déplacer le poussoir 12 d'une quantité $d_e$.

Ce déplacement peut être minoré d'une quantité $d_p$, résultat de l'imposition d'une tension de consigne $V_p$ entre les bornes de l'ensemble piézoélectrique 23. Le déplacement résultant du poussoir 12, est donc égal à :

$$\underline{d} = d_e - d_p$$

Ce déplacement $\underline{d}$ génère, compte tenu de la raideur axiale du frein, une pression de freinage correspondante sur la pile de disques, laquelle pression à son tour génère un couple C de freinage de la roue 1. La vitesse de rotation de la roue 1 est mesurée pour détecter d'éventuels glissements de la roue. Un filtre d'anti-glissement 30 exploite cette mesure de vitesse de rotation pour générer la tension de consigne $V_p$ (qui est nulle en cas d'absence de glissement).

L'invention n'est pas limitée aux modalités particulières de l'invention qui viennent d'être décrites, mais bien au contraire englobe toute variante entrant dans le cadre de l'invention tel que défini par les revendications.

En particulier, bien que l'on ait indiqué que l'ensemble piézoélectrique assurait à lui seul la totalité de la modulation de la pression de freinage, il est possible, tout en restant dans le cadre de l'invention, de commander le moteur électrique 20 de façon à ce qu'il assure seulement une part de cette modulation. Ce peut être le cas notamment si la course de l'ensemble piézoélectrique ne lui permet pas d'assurer un relâchement quasi-complet de la pression de freinage, ce qui se révèle nécessaire par exemple lorsque la roue se trouve sur une plaque de verglas. Dans ce cas, on commande le moteur électrique pour qu'il relâche la pression de freinage en assistance de l'ensemble piézoélectrique. Ainsi, dans la plupart des conditions de freinage, la totalité de la modulation de la pression de freinage est assurée par l'ensemble piézoélectrique. Ce n'est que dans certaines circonstances exceptionnelles que l'ensemble piézoélectrique est assisté par le moteur électrique. Dans ces situations, l'ensemble piézoélectrique n'assure plus qu'une partie de la modulation de la pression de freinage.

Bien que l'on ait illustré un ensemble piézoélectrique unitaire, on pourra prévoir un ensemble constitué de plusieurs éléments unitaires agencés en série.

Bien que l'on ait illustré un ensemble piézoélectrique comme étant de structure tubulaire, on pourra utiliser d'autres agencements, comme par exemple une pluralité de barreaux piézoélectriques disposés parallèlement à eux-mêmes selon une surface tubulaire, les barreaux piézoélectriques fonctionnant alors en parallèle.

Selon un autre agencement, on pourra également prévoir un barreau piézoélectrique unique qui s'étend dans l'axe du poussoir, donc à l'intérieur dudit poussoir, tout en ayant une extrémité fixe.

## Revendications

1. Actionneur pour frein électromécanique, comportant un poussoir (12) et un premier organe moteur (20) agencé pour déplacer le poussoir (12) en regard d'une pile de disques et pour appliquer une pression de freinage sur la pile de disques, l'actionneur comportant un deuxième organe moteur comprenant un ensemble piézoélectrique (23) apte à assurer une modulation de la pression de freinage appliquée sur la pile de disques, **caractérisé en ce que** l'ensemble piézoélectrique (23) est disposé dans l'actionneur pour présenter une extrémité fixe (23B) par rapport au boîtier de l'actionneur.

2. Actionneur selon la revendication 1, **caractérisé en ce qu'**il comporte :

   - un boîtier (14,15,16) dans lequel le poussoir (12) coulisse selon un axe de coulissement (Y),
   - un manchon (18) disposé dans le boîtier autour du poussoir (12) pour tourner autour dudit axe de coulissement (Y) et relié audit poussoir (12) par une liaison hélicoïdale ;
   - un moteur électrique (20) formant le premier organe moteur qui est disposé dans le boîtier autour du manchon (18) et qui est agencé pour entraîner ledit manchon (18) en rotation ;
- l'ensemble piézoélectrique (23) qui est de forme tubulaire et qui est disposé dans le boîtier autour du moteur électrique (20), ledit ensemble piézoélectrique (23) ayant, outre l'extrémité (23B) fixe, une autre extrémité (23A) formant butée axiale pour le manchon (18), l'ensemble piézoélectrique étant agencé pour provoquer un déplacement du manchon (18) dans une direction parallèle à l'axe de coulissement (Y).

3. Actionneur selon la revendication 2, **caractérisé en ce que** le moteur électrique (20) est relié au poussoir (12) par une chaîne cinématique irréversible.

4. Actionneur selon l'une quelconque des revendications 1 à 3, **caractérisé en ce qu'**il est associé à des moyens de mesure d'une tension électrique à des bornes de l'ensemble piézoélectrique (23).

5. Frein électromécanique comportant au moins un actionneur selon l'une des revendications précédentes.

6. Véhicule comportant au moins un frein selon la revendication 5.

7. Procédé de mise en oeuvre d'un actionneur pour frein électromécanique selon l'une quelconque des revendications 1 à 4, **caractérisé en ce que** l'on relève une tension électrique à des bornes de l'ensemble piézoélectrique (23), au moins lorsque celui-ci n'est pas actif.

**Claims**

1. An actuator for an electromechanical brake, the actuator comprising a pusher (12) and a first drive member (20) arranged to move the pusher (12) in register with a stack of disks and to apply a braking pressure to the stack of disks, the actuator including a second drive member comprising a piezoelectric assembly (23) suitable for modulating the braking pressure applied to the stack of disks, the actuator being **characterized in that** the piezoelectric assembly (23) is disposed inside the actuator so as to present an end (23B) that is stationary with respect to a housing of the actuator.

2. An actuator according to claim 1, **characterized in that** it comprises:

   a housing (14, 15, 16) in which the pusher (12) slides along a sliding axis (Y);
   · a sleeve (18) disposed inside the housing around the pusher (12) to turn about said sliding axis (Y) and connect it to said pusher (12) via a helical connection;
   · an electric motor (20) forming the first drive member which is disposed inside the housing around the sleeve (18) and which is arranged to drive said sleeve (18) in rotation; and
   · the piezoelectric assembly (23) which is tubular in shape and which is disposed inside the housing and around the electric motor (20), said piezoelectric assembly (23) having, in addition to the stationary end (23B), another end (23A) forming an axial abutment for the sleeve (18), the piezoelectric assembly being arranged to cause the sleeve (18) to move in a direction parallel to the sliding axis (Y).

3. An actuator according to claim 2, **characterized in that** the electric motor (20) is connected to the pusher (12) via an irreversible drive system.

4. An actuator according to any one of claims 1 to 3, **characterized in that** it is associated with means for measuring an electric voltage across the terminals of the piezoelectric assembly (23).

5. An electromechanical brake including at least one actuator according to any preceding claim.

6. A vehicle including at least one brake according to claim 5.

7. A method of implementing an actuator for an electromechanical brake according to any one of claims 1 to 4, the method being **characterized in that** an electric voltage is taken from across the terminals of the piezoelectric assembly (23), at least while the actuator is not active.

**Patentansprüche**

1. Aktuator für eine elektromechanische Bremse, umfassend einen Stößel (12) und ein erstes Antriebselement (20), das derart ausgebildet ist, dass es den Stößel (12) gegenüber einem Stapel von Scheiben verschiebt und einen Bremsdruck auf den Stapel von Scheiben ausübt, wobei der Aktuator ein zweites Antriebselement umfasst, das eine piezoelektrische Einheit (23) enthält, die dazu geeignet ist, eine Modulation des auf den Stapel von Scheiben ausgeübten Bremsdruckes sicherzustellen, **dadurch gekennzeichnet, dass** die piezoelektrische Einheit (23) in dem Aktuator derart angeordnet ist, dass sie in Bezug auf das Gehäuse des Aktuators ein festes Ende aufweist.

2. Aktuator nach Anspruch 1, **dadurch gekennzeichnet, dass** er umfasst:

- ein Gehäuse (14, 15, 16), in dem sich der Stößel (12) entlang einer Verschiebungsachse (Y) verschiebt,

- eine Hülse (18), die in dem Gehäuse um den Stößel (12) herum angeordnet ist, um sich um die genannte Verschiebungsachse (Y) herum zu drehen, und die mit dem genannten Stößel (12) über eine Schraubverbindung verbunden ist,

einen Elektromotor (20), der das erste Antriebselement bildet, das in dem Gehäuse um die Hülse (18) herum angeordnet und derart ausgebildet ist, dass es die genannte Hülse (18) in Drehrichtung antreibt,

- die piezoelektrische Einheit (23), die rohrförmig ist und in dem Gehäuse um den Elektromotor (20) herum angeordnet ist, wobei die genannte piezoelektrische Einheit (23) neben dem festen Ende (23B) ein weiteres Ende (23A) hat, das einen axialen Anschlag für die Hülse (18) bildet, wobei die piezoelektrische Einheit derart ausgebildet ist, dass sie eine Verschiebung der Hülse (18) in eine zur Verschiebungsachse (Y) parallele Richtung bewirkt.

3. Aktuator nach Anspruch 2, **dadurch gekennzeichnet, dass** der Elektromotor (20) über eine nicht umkehrbare kinematische Kette mit dem Stößel (12) verbunden ist.

4. Aktuator nach einem der Ansprüche 1 bis 3, **dadurch gekennzeichnet, dass** er mit Messmitteln zum Messen einer elektrischen Spannung an Klemmen der piezoelektrischen Einheit (23) verbunden ist.

5. Elektromechanische Bremse, die mindestens einen Aktuator nach einem der vorhergehenden Ansprüche umfasst.

6. Fahrzeug, das mindestens eine Bremse nach Anspruch 5 umfasst.

7. Verfahren zum Einsetzen eines Aktuators für eine elektromechanische Bremse nach einem der vorhergehenden Ansprüche 1 bis 4, **dadurch gekennzeichnet, dass** man eine elektrische Spannung an Klemmen der piezoelektrischen Einheit (23) abliest, zumindest wenn diese nicht aktiv ist.

EP 1 500 566 B1

FIG.1

12
11 13 4 6 5
1
7
10
2
3 8 3
X
9
50

FIG.2

11
14 23 20B 20A 22 21
16
15
20
18
19
17
19
Y
12
23B 23A

8

## FIG.3

## FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19858764 A
- US 5090518 A
- US 6179097 A
- EP 0984190 A